# EUROPÄISCHE PATENTSCHRIFT

(11) **EP 3 210 734 B1**
(45) Veröffentlichungstag und Bekanntmachung des Hinweises auf die Patenterteilung: **23.01.2019**
(21) Anmeldenummer: 17158246.3
(22) Anmeldetag: 27.02.2017
(51) Int. Cl.: B29C 33/30, B65B 9/04, B65B 47/10, B65B 57/10, B65B 47/02, B65B 59/02, B29C 51/30

(54) **VORRICHTUNG UND VERFAHREN ZUM TIEFZIEHEN MITTELS EINER VARIABLEN FORM**
DEVICE AND METHOD FOR DEEP-DRAWING BY MEANS OF A VARIABLE MOULD
DISPOSITIF ET MÉTHODE POUR L'EMBOUTISSAGE EN UTILISANT UN MOULE VARIABLE

(30) Priorität: 26.02.2016 DE 102016203145
(43) Veröffentlichungstag der Anmeldung: 30.08.2017
(73) Patentinhaber: Deutsches Institut für Lebensmitteltechnik e.V., 49610 Quakenbrück (DE)
(72) Erfinder: Hukelmann, Bernhard, 49610 Quakenbrück (DE)
(74) Vertreter: Taruttis, Stefan Georg

(56) Entgegenhaltungen:
- WO-A1-2006/048652
- WO-A1-2015/091404
- DE-A1-102009 051 558
- DE-U1- 20 320 712
- JP-A- H10 225 734
- JP-A- 2007 245 515
- US-A1- 2009 108 491
- US-B1- 6 209 380
- US-B1- 6 386 850

## Beschreibung

Die Erfindung betrifft eine Vorrichtung und ein damit ausführbares Verfahren zur Herstellung von verpackten Gegenständen, insbesondere von stückigen Lebensmitteln, z.B. von rohem Fleisch, Geflügel, Fisch, Pflanzen oder zubereiteten Lebensmitteln, wie beispielsweise Backwaren.

### Stand der Technik

Die WO 2011/134735 beschreibt das Verpacken von Lebensmitteln zwischen zwei Folien, die ohne Wärmeeinwirkung verformbar und selbst rückstellend sind, wobei eine Unterfolie durch Druckeinwirkung zu einer Mulde geformt wird. Die Unterfolie wird z.B. in eine Mulde eingebracht und dort fixiert, gegebenenfalls unterstützt durch einen Widerhalter. Nach Entlastung soll sich die flexible Folie rückstellen und das Produkt ohne Lufteinschlüsse umfassen.

Die DE 3911463 C2 beschreibt zur Herstellung von gebrühter Wurst das Einfüllen von Brät in vorgefertigte Formen einer Tiefziehfolie, die unter Vakuum geschlossen werden und anschließend erhitzt werden.

Die US 2009/0108491 A1 beschreibt eine Form mit gegeneinander verfahrbaren Stempeln, in der von Folie umhüllter Schaum geformt werden kann.

Die US 6,386,850 B1 beschreibt eine Vielzahl gegeneinander verfahrbarer Stempel zum Formen von Schaum in einer Plastiktüte.

Die WO 2006/048652 A1 beschreibt eine Form mit zwei elastisch verformbaren Platten, die jeweils durch eine Vielzahl verschieblicher Stempel gegeneinander verfahrbar sind, um dazwischen eine einstellbare Form zu bilden.

Die US 6,209,380 B1 und die DE 20320712 U1 beschreiben Anordnungen von parallel gegeneinander verschieblichen Stempeln, deren Stirnflächen zusammen eine Formungsoberfläche bilden, um daran eine Platte oder Masse zu formen.

Die WO 2015/091404 A1 beschreibt das Verpacken eines Gegenstands, bei dem eine Oberfolie von einem Stempel angesaugt wird, der von einem Stempel umfänglich umfasst ist.

### Aufgabe der Erfindung

Bei der Erfindung stellt sich die Aufgabe, eine alternative Vorrichtung und ein alternatives Verfahren zur Herstellung verpackter Gegenstände, insbesondere von Lebensmitteln bereitzustellen.

### Beschreibung der Erfindung

Die Erfindung löst die Aufgabe mit den Merkmalen der Ansprüche, insbesondere durch eine Vorrichtung, die zur Verwendung für die Verpackung eines Gegenstands hergerichtet ist und eine Formungsfläche zum Formen einer ersten Folie aufweist. Die Formungsfläche zeichnet sich dadurch aus, dass sie aus zumindest 3 Druckflächen von Stempeln gebildet wird, bevorzugt aus zumindest 5, z.B. 10 bis 20 Druckflächen oder z.B. 20 - 5250 (70*75) Druckflächen, die z.B. in Reihen oder kreisförmig angeordnet sein können. Jede Druckfläche ist Teil eines Stempels, in dem die Druckfläche an einem Träger befestigt ist. Jeder Träger ist in einer Führung geführt, die in einer Anordnung von Führungen enthalten ist, so dass zur Bewegung aller Stempel die Anordnung bewegt werden kann. Die Träger sind verschieblich in den Führungen der Anordnung geführt und können relativ zueinander in einer beliebigen Stellung zueinander und optional zusätzlich in einer beliebigen Stellung entlang der Führung festgelegt werden, um die am Träger angeordnete Druckfläche der Stempel in einer Stellung zueinander festzulegen und optional zusätzlich in einer Stellung zur Führung festzulegen. Wenn die Stempel gegeneinander in einer Stellung festgelegt sind und gegenüber ihren Führungen nicht festgelegt sind, ist die Anordnung von gegeneinander festgelegten Stempeln, deren Druckflächen die Formungsfläche bilden, insgesamt gegen die Führungen bzw. gegen die Basis, in der die Führungen angebracht sind, verschieblich, bis zum Anliegen zumindest eines Stempels an einer Führung bzw. an der Basis.

Dabei kann die Anordnung von Führungen Fixiereinrichtungen für die Träger aufweisen, z.B. jeweils eine einer Führung zugeordnete Klemme. Die Anordnung von Führungen kann z.B. eine Platte, eben oder gebogen, als Basis aufweisen, in der die Führungen ausgebildet sind. Eine Klemme kann z.B. eine von außen angebrachte Schelle sein. Ein Träger kann z.B. als Stange, bogenförmig oder gerade, oder flexibel, z.B. als Seil z.B. eines Bowdenzugs, ausgebildet sein.

In einer Ausführungsform sind die Seitenwände der Stempel zumindest in Abwesenheit von Unterdruck mit Abstand zueinander angeordnet und werden dadurch in einer Stellung relativ zueinander festgelegt, dass Unterdruck gegenüber den Druckflächen an die Stempel angelegt wird, so dass die Stempel mit ihren Seitenwänden aneinander gezogen werden. In dieser Ausführungsform führen die Führungen die Träger mit Spiel, so dass die Stempel senkrecht zum Träger schwenkbar sind. Optional sind die Seitenwände der Stempel geformt, dass sie auch bei Anliegen eines Unterdrucks voneinander beabstandet sind und zwischen sich etwa parallel zur Längsachse der Stempel verlaufende Kanäle bilden, durch die der Unterdruck bis in die Formungsfläche wirkt. Eine solche Form der Seitenwände weist z.B. parallel zur Längsachse des Stempels und/oder senkrecht zur Seitenwand Vorsprünge und Einbuchtungen auf, die nicht passend zu der Seitenwand eines benachbarten Stempels geformt sind. Eine solche Form der Seitenwand kann z.B. parallel zur Längsachse des Stempels verlaufende Nuten aufweisen, die unregelmäßig beabstandet sind und zu den Vorsprüngen der Seitenwand eines benachbarten Stempels versetzt sind und/oder eine andere Breite und/oder Tiefe als die Vorsprünge aufweisen. Die Unterdruckquelle ist gesteuert mit einem Raum auf der Seite der Stempel verbunden, die deren Druckflächen gegenüber liegt.

In bevorzugter Ausführungsform sind die Träger gesteuert in eine Stellung entlang der Führung verfahrbar, z.B. motorisch angetrieben, und in einer Stellung festlegbar. In dieser Ausführung kann der Antrieb eines Trägers die Fixiereinrichtung für den Träger bilden, z.B. ein Motor mit selbsthemmendem Getriebe oder ein Schrittmotor als Antrieb für einen Träger.

Die Träger, die als Stifte ausgebildet sein können, können derart gestaltet sein, dass sie über ein gesondertes Positioniersystem, einzeln oder in einer Gruppe von zumindest 2 Trägern, in eine zuvor definierte Position geschoben werden. Zum Festlegen können die zuvor genannten Fixiereinrichtungen eingesetzt werden.

Die Vorrichtung zeichnet sich durch eine Zuführeinrichtung für die erste Folie vor die Formungsfläche aus, so dass die Vorrichtung zur Zuführung einer ersten Folie vor die Formungsfläche eingerichtet ist. Des Weiteren zeichnet sich die Vorrichtung durch die Verbindung einer Unterdruckquelle mit Öffnungen der Druckflächen und/oder mit Zwischenräumen zwischen den Stempeln bzw. zwischen den Druckflächen aus, so dass die Vorrichtung eingerichtet ist, dass Unterdruck gesteuert an der Formungsfläche anliegt. Dadurch kann die erste Folie gegen die aus den Druckflächen gebildete Formungsfläche gesaugt werden und die erste Folie entsprechend der Formungsfläche geformt werden.

Dabei kann die Vorrichtung eingerichtet sein, dass der Unterdruck angelegt wird, wenn die erste Folie an der Formungsfläche anliegt und gegenüber der Formungsfläche der Gegenstand an der ersten Folie anliegt. Alternativ kann die Vorrichtung eingerichtet sein, dass der Unterdruck angelegt wird, wenn nur die erste Folie an der Formungsfläche anliegt ohne Kontakt mit dem Gegenstand, so dass die erste Folie nur durch die Formungsfläche geformt wird.

Alternativ kann die Vorrichtung eine Zuführeinrichtung für die erste Folie vor die Formungsfläche aufweisen, so dass die Vorrichtung zur Zuführung einer ersten Folie vor die Formungsfläche eingerichtet ist, und eingerichtet sein, die erste Folie mit Druckgas, insbesondere warmem Druckgas, gegen die Formungsfläche zu pressen. Dabei kann die Vorrichtung z.B. dadurch zum Pressen von Druckgas gegen die Formungsfläche eingerichtet sein, dass sie einen Deckel aufweist, der einen von der Formungsfläche gebildeten Hohlraum abschließt und der einen Anschluß für das Druckgas aufweist. Der Deckel weist bevorzugt eine elastische Oberfläche auf, die gegen die umfänglich angeordneten Druckflächen der Formungsfläche anzuordnen ist. In dieser Ausführungsform können optional Öffnungen in den Druckflächen und/oder Zwischenräume zwischen den Stempeln bzw. zwischen den Druckflächen angeordnet sein, z.B. um Luft zwischen der ersten Folie und der Formungsfläche entweichen zu lassen.

Alternativ kann die Vorrichtung eine Patrize aufweisen, die eingerichtet ist, in Richtung auf die Formungsfläche bzw. gegen die auf der Formungsfläche angeordnete erste Folie belastet zu werden. Eine Patrize kann temperierbar sein, z.B. mit einem Wärmeübertragermedium gefüllt oder durchströmt sein, bevorzugt alternierend mit einem Wärmeübertragermedium bei einer Temperatur oberhalb der Erweichungstemperatur der ersten Folie und mit einem Wärmeübertragermedium bei einer Temperatur unterhalb der Erweichungstemperatur der ersten Folie. Alternativ kann die Vorrichtung zwei Patrizen aufweisen, eine mit einem Wärmeübertragermedium bei einer Temperatur oberhalb der Erweichungstemperatur der ersten Folie und eine mit einem Wärmeübertragermedium bei einer Temperatur unterhalb der Erweichungstemperatur der ersten Folie, wobei diese Patrizen eingerichtet sind, abwechselnd gegen die Formungsfläche belastet zu werden. Eine Patrize kann z.B. an einem verfahrbaren Arm angebracht sein, der relativ zur Formungsfläche verfahrbar ist. In dieser Ausführungsform ist die Vorrichtung insbesondere geeignet, verhältnismäßig starre erste Folien, z.B. Metallfolien oder Kunststofffolien aus biegefesten Kunststoffen zu einer Verpackung zu formen, die an die dreidimensionale Form eines Gegenstands angepasst ist.

Eine Patrize kann z.B. eine expandierbare Blase aufweisen, z.B. aus elastischem Gummi. Eine expandierbare Blase kann z.B. mit Druckgas, z.B. Dampf oder Luft beaufschlagt sein.

Eine Patrize kann eine in einem Abstand zur Formungsfläche anordnbare zweite Formungsfläche aus zweiten Druckflächen von zweiten Stempeln aufweisen, deren zweite Druckflächen gegen die Druckflächen der Formungsfläche verfahrbar sind, z.B. durch Verfahren einer zweiten Anordnung von zweiten Führungen, in denen die zweiten Träger der zweiten Stempel geführt sind. Dabei kann die zweite Formungsfläche durch zweite Druckflächen zweiter Stempel gebildet werden, die in einer Vorrichtung angeordnet sind, wie sie voranstehend beschrieben ist. Eine solche Vorrichtung weist daher Stempel in Führungen geführte Stempel auf, die in einer Stellung entlang der Führung festlegbar sind, die auch als erste Stempel bezeichnet werden können, und zweite Stempel auf, deren zweite Druckflächen eine zweite Formungsfläche bilden und deren zweite Träger in zweiten Führungen verschieblich und in einer zweiten Stellung festlegbar sind, wobei die zweiten Stempel in ihrer zweiten Stellung eine zur (ersten) Formungsfläche der ersten Stempel passende bzw. kongruente zweite Formungsfläche bilden.

Die Vorrichtung und das Verfahren formen die erste Folie durch das Ansaugen bzw. Pressen der ersten Folie gegen die Formungsfläche, so dass die erste Folie eine bleibende Vorformung entsprechend der dreidimensionalen Form des Gegenstands erhält, bevor sie von der Formungsfläche gelöst wird. Bevorzugt ist die Vorrichtung daher eingerichtet, die Folie mit einer bleibenden Verformung an der Folie zu versehen, bzw. eine Folie mit einer bleibenden Verformung entsprechend der Formungsfläche herzustellen.

Die unter Verwendung der Vorrichtung bzw. mit dem Verfahren hergestellte erste Folie und eine Verpackung mit dieser liegt auf Grund der Vorformung der ersten Folie gleichmäßiger und bevorzugt mit geringeren Lufteinschlüssen oder geringerem Volumen eines eingefüllten Schutzgases an dem Gegenstand an.

Ein Vorteil des erfindungsgemäßen Verfahrens bzw. des damit hergestellten verpackten Gegenstands kann darin liegen, dass die erste Folie nicht rückstellend ist, so dass sich die erste Folie nach der Herstellung nicht verzieht und z.B. sich nicht gegenüber der daran angeschweißten zweiten Folie verzieht.

In einer ersten Ausführungsform können die Träger der Stempel federbelastet sein, so dass die Druckflächen der Stempel bei Kontakt der Vorrichtung mit dem Gegenstand in ihrer Führung in eine Stellung bewegt werden, in der sie die dreidimensionale Form des Gegenstands nachbilden. In dieser Stellung können die Träger festgelegt werden, so dass die Stempel auch bei Entfernung der Anordnung von dem Gegenstand oder bei Anlegen von Unterdruck in die Formungsfläche die Druckflächen der Stempel eine Formungsfläche bilden, die die dreidimensionale Form des Gegenstands nachbildet.

In einer zweiten Ausführungsform sind die Träger der Stempel gesteuert angetrieben, insbesondere jeweils einzeln, und in einer Stellung festlegbar. In dieser Ausführungsform können die Druckflächen der Stempel unabhängig von einem Kontakt mit dem Gegenstand in eine Stellung bewegt und in dieser festgelegt werden, in der sie die dreidimensionale Form des Gegenstands nachbilden und eine die dreidimensionale Form nachbildende Formungsfläche bilden.

In der zweiten Ausführungsform sind bevorzugt die Träger abhängig von Signalen einer Abtasteinrichtung gesteuert angetrieben, wobei die Signale die dreidimensionale Form des Gegenstands abbilden. Eine Abtasteinrichtung kann eine mechanische Abtasteinrichtung sein, z.B. eine Anordnung von Stempeln, deren Träger in Führungen einer Anordnung geführt sind, z.B. wie voranstehend beschrieben, wobei an den Führungen Sensoren zur Erfassung des Wegs der Träger entlang ihrer Führung angeordnet sind, so dass die Signale dieser Wegsensoren die Signale für den gesteuerten Antrieb der Stempel in Stellungen bilden, in denen die Druckflächen die dreidimensionale Form des Gegenstands nachbilden. Dabei kann die dreidimensionale Form generell auf den Abschnitt des Gegenstands beschränkt sein, der über eine Unterlage ragt, auf der der Gegenstand angeordnet ist.

Alternativ und bevorzugt ist die Abtasteinrichtung eine optische Abtasteinrichtung, z.B. ein Scanner, insbesondere ein Linienscanner oder eine optische Kamera, z.B. eine 3D-Digitalkamera. In dieser Ausführungsform weist die Abtasteinrichtung eine elektronische Auswertung auf, die aus den optischen Aufnahmen Signale für die dreidimensionale Form des Gegenstands bestimmt.

Die Abtastvorrichtung ist daher eingerichtet, die dreidimensionale Form des Gegenstands abzutasten und die Vorrichtung ist eingerichtet, die Träger abhängig von Signalen für die dreidimensionale Form des Gegenstands in eine Stellung zu bewegen und in dieser festzulegen, in der die Druckflächen der Stempel bis angrenzend an oder bis in einen vorbestimmten Abstand zu der abgetasteten Form des Gegenstands positioniert sind.

Die Vorrichtung kann eingerichtet sein, dass die Träger in eine Stellung bewegt werden, die um einen vorbestimmten Abstand größer oder kleiner ist als die dreidimensionale Form des Gegenstands. Z.B. können die Träger um diesen Abstand aus ihren Führungen in Richtung auf die Druckflächen bewegt werden bzw. um diesen Abstand weiter in die Führungen bewegt werden. Der Abstand kann z.B. gleich der Dicke der ersten Folie sein.

Bevorzugt weist die Vorrichtung Schweißelemente auf, die die Anordnung von Druckflächen umfassen. Solche Schweißelemente, z.B. gesteuert beheizbare elektrische Thermoelemente, ermöglichen das Verschweißen der ersten Folie, die über die Schweißelemente ragt, mit einer zweiten Folie, die im Bereich der Schweißelemente an der ersten Folie anliegt. Bevorzugt sind die Schweißelemente in einer gemeinsamen planen Ebene angeordnet, so dass die Schweißelemente z.B. die erste Folie gegen eine zweite Folie drücken können, die auf einer ebenen Unterlage angeordnet ist. Die Schweißelemente können entsprechend der Stempel in Führungen der Basis verschieblich geführt sein. Optional können die Schweißelemente durch ein umfänglich geschlossenes beheizbares Thermoelement ausgebildet sein, das die Anordnung aus Stempeln bzw. deren Druckflächen einfasst.

Optional kann die Vorrichtung eine Schneidvorrichtung aufweisen, die eingerichtet ist, die erste Folie und/oder die zweite Folie in einem Abstand umlaufend um die Formungsfläche oder umlaufend um die Schweißelemente zu durchtrennen. Auf diese Weise kann die Vorrichtung eingerichtet sein, die erste Folie und/oder die zweite Folie passend zum Gegenstand aus zugeführtem Rollenmaterial der jeweiligen Folie auszuschneiden. Eine Schneideinrichtung kann z.B. ein geführtes Messer oder eine umlaufend angeordnete Schneide sein, die z.B. gegen eine Unterlage geführt ist, wobei bevorzugt die Unterlage eine Gegenschneide aufweist, die passend mit der Schneide als Schere zusammenwirkt.

Die Vorrichtung kann z.B. einen Druckschalter aufweisen, der die Schweißelemente bei Annäherung an eine Unterlage anschaltet, auf der z.B. eine zweite Folie angeordnet ist.

Bevorzugt weist die Vorrichtung eine Unterlage auf, auf der der Gegenstand angeordnet wird, sowie weiter bevorzugt auch eine Zuführeinrichtung für eine zweite Folie, die eingerichtet ist, die zweite Folie auf die Unterlage zu platzieren. Die Zuführeinrichtung kann z.B. eine Rolle für zweite Folie aufweisen, von der die zweite Folie abgerollt und auf die Unterlage aufgelegt wird. Alternativ kann die Zuführeinrichtung z.B. eingerichtet sein, vereinzelte zweite Folien nebeneinander auf der Unterlage abzulegen. Die zweite Folie kann Kunststofffolie sein, optional transparent, oder Papier, das mit Kunststoff beschichtet ist, der mit der ersten Folie verschweißbar ist.

Die Druckflächen der Stempel sind bevorzugt gesteuert temperiert, z.B. beheizbar und/oder kühlbar, so dass im Verfahren die erste Folie durch Beheizen der Druckflächen leichter verformt wird und bevorzugt durch anschließendes Kühlen der Druckflächen in der Form entsprechend der Formungsfläche eine höhere Festigkeit erhält.

Weiter optional können die Druckflächen schwenkbar an ihrem jeweiligen Stempel angebracht sein, z.B. um genau eine zur Längsachse des Stempels senkrechte Schwenkachse oder um ein Kugelgelenk, und weiter bevorzugt in einer Schwenkstellung festlegbar sein. Solche, gegen die Längsachse des Stempels schwenkbare Druckflächen können z.B. eingerichtet sein, dass sie gleichzeitig mit der Fixiereinrichtung in einer Schwenkstellung festgelegt werden.

Bevorzugt ist die Anordnung der Führungen mit den darin an ihren Trägern geführten Stempeln an einem Trägerarm angebracht, der eingerichtet ist, die Anordnung an die Unterlage zu bewegen. Ein Trägerarm kann z.B. ein gesteuerter mechanischer Arm sein, z.B. eine Linearführung oder ein Schwenkarm, dessen Bewegung gegen die Unterlage mit der Bewegung der Unterlage abgestimmt ist. In dieser Ausführung eignet sich die Vorrichtung zur Herstellung von verpackten Gegenständen, die auf einer Unterlage gefördert werden, z.B. auf einem Förderband.

Für die Wirkung des Unterdrucks der Unterdruckquelle bis in die Formungsfläche können die Druckflächen der Stempel jeweils umfänglich von Seitenflächen eingefasst sein, die nicht passend zu den Seitenflächen ausgebildet sind, z.B. nicht passend zu den Seitenflächen benachbarter Stempel geformt sein, optional mit nicht passend zu den Druckflächen benachbarter Stempel ausgebildeten Druckflächen, so dass zwischen den Stempeln Lücken ausgebildet sind, durch die der Unterdruck bis in die Formungsfläche treten kann. Alternativ oder zusätzlich können die Seitenflächen, die die Druckflächen der Stempel einfassen, Stege oder Vorsprünge aufweisen, die zwischen sich Vertiefungen, z.B. Kanäle bilden, die auf Höhe der Druckflächen münden. Weiter alternativ oder zusätzlich können die Stempel an ihren Trägern so geführt sein, dass ihre Seitenflächen mit einem Abstand vom mittleren Spielpassungsbereich (z.B. H8/h9) - bis in den mittleren Übergangspassungsbereich (z.B. H7/j6) angeordnet sind, insbesondere in festgelegten Stellungen, in denen die Druckflächen die dreidimensionale Form des Gegenstands nachbilden, optional mit Abstand nachbilden.

Optional kann die Vorrichtung für ein zusätzliches Klemmen der Träger eine zusätzliche Fixiereinrichtung aufweisen, um die Träger in ihrer Stellung in ihren jeweiligen Führungen zu halten. Eine zusätzliche Fixiereinrichtung kann z.B. eine von außen auf die Träger oder die Stempel wirkende Schelle sein, die z.B. die Träger oder Stempel gegeneinander drückt.

Alternativ können für die Wirkung des Unterdrucks bis in die Formungsfläche in den Druckflächen Durchbrechungen vorgesehen sein, die mit der Unterdruckquelle in Verbindung stehen. Solche Durchbrechungen können z.B. ein oder mehrere Bohrungen oder Leitungen sein, die in der Druckfläche münden

Die Unterdruckquelle kann z.B. an einem Gehäuse angeschlossen sein, das den Raum zwischen der Anordnung der Führungen und den Rückseiten der Druckflächen der Stempel begrenzt, oder an einem Gehäuse, das die Anordnung der Führungen überdeckt, z.B. auf der den Druckflächen gegenüberliegenden Seite der Anordnung.

Der Gegenstand ist bevorzugt ein Lebensmittel, z.B. ein Stück Fleisch, optional mit Knochen, z.B. Geflügel, Obst oder Gemüse, optional ein zumindest teilweise zubereitetes Lebensmittel wie z.B. eine Backware, Halbfertigprodukte etc. , insbesondere Gegenstände mit jeweils unterschiedlichen bzw.individuell hergestellten Maßen.

Die Erfindung wird nun genauer mit Bezug auf die Figuren beschrieben, die schematisch
- in Figur 1 einen Schnitt durch eine Vorrichtung,
- in Figur 2 eine Aufsicht auf eine Vorrichtung,
- in Figur 3 einen Schnitt durch eine Vorrichtung,
- in Figur 4 einen Schnitt durch eine Vorrichtung,
- in Figur 5 einen Schnitt durch eine Vorrichtung,
- in Figur 6 einen Schnitt durch eine Vorrichtung,
- in Figuren 7 und 8 Aufsichten auf eine Vorrichtung und
- in Figur 9 eine beispielhafte Form von Stempeln gemäß der Erfindung zeigen.

In den Figuren bezeichnen gleiche Bezugsziffern funktionsgleiche Elemente.

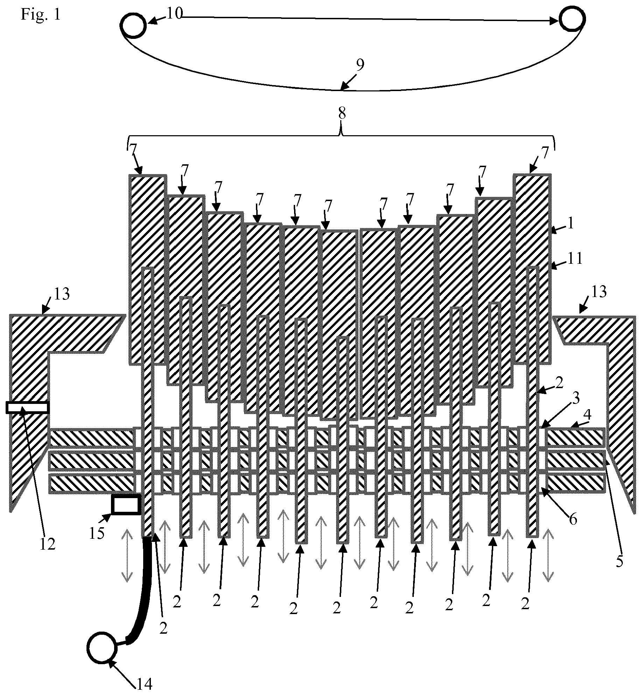

Figur 1 zeigt eine Vorrichtung mit Stempeln 1, deren Träger 2 jeweils in einer Führung 3 geführt sind. Die Führungen 3 sind als Anordnung in einer Platte als Basis 4 angeordnet, so dass bei Bewegung der Basis 4 die Anordnung der Führungen 3 und damit die Stempel 1 gemeinsam bewegt werden können. An jeder Führung 3 ist eine Fixiereinrichtung 5 angebracht, hier in Form einer gegen die Träger 2 beweglichen Bohrung 6, die einen Träger 2 gegen die Führung 3 klemmen kann, um den Träger in einer Stellung entlang der Führung 3 festzulegen. Die Stempel 1 weisen an ihrem dem Träger 2 gegenüberliegenden Ende jeweils eine Druckfläche 7 auf. Die Druckflächen 7 bilden zusammen die Formungsfläche 8, vor die eine erste Folie 9 mittels einer Zuführeinrichtung 10 für die erste Folie 9 gebracht werden kann. Die Seitenwände 11 der Stempel 1 weisen zwischen sich Lücken auf, die Kanäle bilden, durch die ein Unterdruck bis in die Formungsfläche 8 wirken kann, der gegenüber der Formungsfläche 8 auf die Stempel wirkt. Der Unterdruck kann z.B. durch einen Anschluß 12 für eine Unterdruckquelle in ein Gehäuse 13 wirken, das die Stempel 1 auf ihrem Abschnitt gegenüber den Druckflächen 7 umfasst. Generell kann das Anlegen eines Unterdrucks bei Lücken zwischen den Stempeln 1 den Vorteil haben, dass die Stempel mit ihren Seitenwänden 11 gegeneinander gezogen werden und dadurch relativ zueinander festgelegt werden.

Die Stempel 1 sind zum Verfahren entlang der Führungen 3 durch jeweils einen Antrieb 14 angetrieben, z.B. mittels Bowdenzügen, die jeweils mit einem Stellmotor als Antrieb 14 verbunden sind. Entsprechend der bevorzugten Ausführung sind an den Führungen 3 Sensoren 15 zur Erfassung des Verfahrwegs der Träger 2 entlang ihrer Führung 3 angeordnet sind, so dass die Signale dieser Wegsensoren 15 die Signale für den gesteuerten Antrieb der Stempel 1 in Stellungen bilden, in denen deren Druckflächen 7 eine dreidimensionale Form eines Gegenstands zumindest anteilig nachbilden, für den die erste Folie in passender Form hergestellt wird.

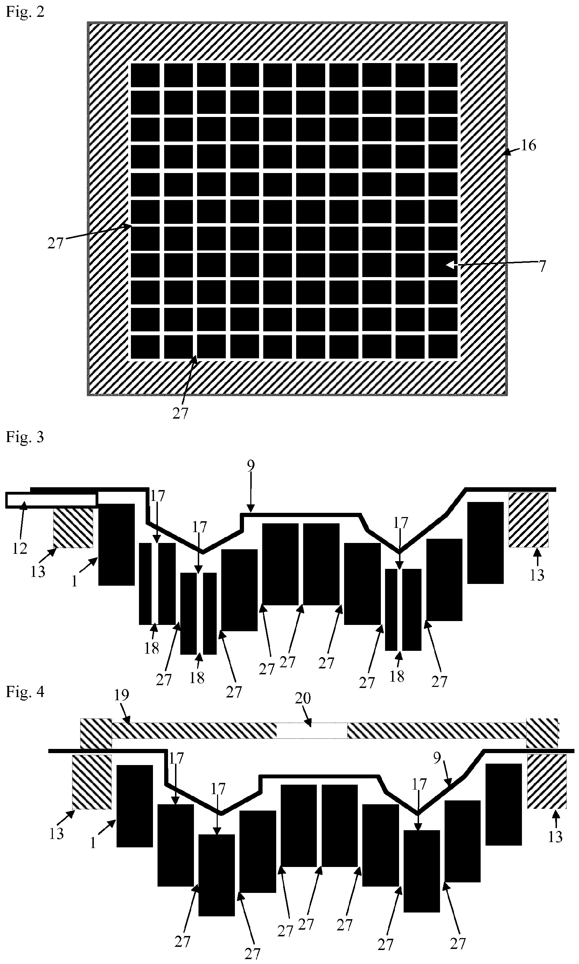

Die Figur 2 zeigt eine Anordnung von Druckflächen 7 von Stempeln 1, die von einem Schweißelement 16 eingefasst ist, das gesteuert beheizbar ist, um eine erste Folie, die über die Druckflächen 7 hinausragt, durch Erwärmung mit einer aufliegenden zweiten Folie zu verschweißen. Zwischen den Druckflächen 7 der Stempel 1 sind durch den Abstand der Seitenflächen der Stempel 1 Kanäle 27 ausgebildet, durch die Unterdruck von dem Abschnitt der Stempel gegenüber ihrer Druckfläche 7 bis in die Formungsfläche 8 wirken kann.

Die Figur 3 zeigt eine Ausführungsform der Vorrichtung, die eingerichtet ist, die erste Folie 9 mittels Unterdrucks gegen die aus den Druckflächen 7 der Stempel 1 gebildete Formungsfläche 8 zu bewegen. In der hier gezeigten Ausführung sind die Träger (nicht gezeigt) der Stempel 1 in Führungen in einer Stellung festgelegt. Optional können die Stempel 1 Öffnungen 17 von Bohrungen 18 aufweisen, die längs durch einen Stempel 1 verlaufen und durch die Unterdruck vom gegenüberliegenden Abschnitt eines Stempels 1 bis in dessen Druckfläche 7 wirken kann, wobei eine Unterdruckquelle an dem der Druckfläche 7 gegenüberliegenden Abschnitt angeschlossen ist.

Die Figur 4 zeigt eine Ausführungsform der Vorrichtung, die eingerichtet ist, die erste Folie 9 mittels Überdrucks gegen die Formungsfläche 8 zu pressen. Diese Ausführungsform weist einen Deckel 19 auf, der die Formungsfläche 8 überdeckt bzw. einen von der Formungsfläche 8 gebildeten Hohlraum abschließt und der einen Anschluß 20 für das Druckgas aufweist. Bei Überdruck, der an dem Anschluß 20 anliegt, wird eine über der Formungsfläche 8 angeordnete erste Folie 9 gegen die Formungsfläche 8 gepresst. Anschließend wird der Deckel 19 von der Formungsfläche 8 entfernt.

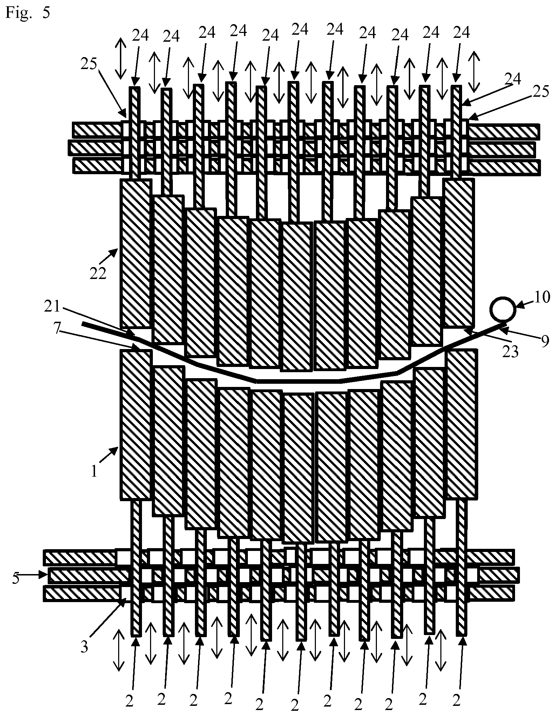

Die Figur 5 zeigt eine Ausführungsform der Vorrichtung, die eingerichtet ist, die erste Folie 9 mittels einer Patrize 21, die von zweiten Stempeln 22 gebildet wird, gegen die Formungsfläche 8 zu pressen. Dabei bilden die zweiten Druckflächen 23 der zweiten Stempel 22 eine zweite Formungsfläche. Die zweiten Träger 24 sind in zweiten Führungen 25 verschieblich und mittels einer zweiten Fixiereinheit in einer zweiten Stellung festlegbar. Bevorzugt ist die Patrize eingerichtet, dass die zweiten Stempel 22 in einer zweiten Stellung relativ zueinander, bevorzugt zusätzlich in ihren zweiten Führungen 25 festgelegt sind, in der ihre ihre zweiten Druckflächen 23 eine zur (ersten) Formungsfläche 8 der ersten Stempel 1 passende bzw. kongruente zweite Formungsfläche bilden. Durch das Verfahren der Patrize 21 gegen die von den (ersten) Stempeln 1 gebildete Formungsfläche 8 wird die erste Folie 9 in eine dreidimensionale Form umgeformt.

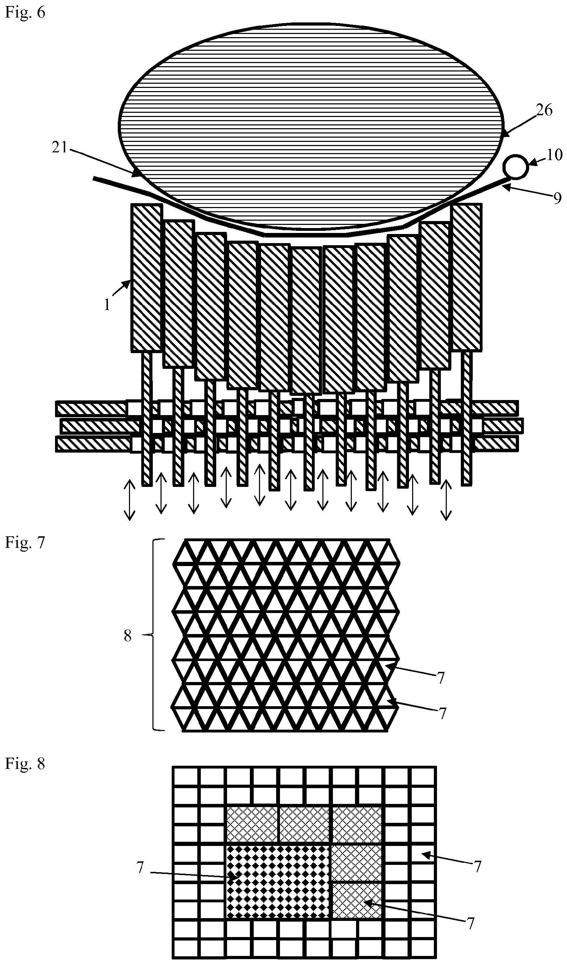

Die Figur 6 zeigt eine Ausführungsform der Vorrichtung, die eingerichtet ist, die erste Folie 9 mittels einer Patrize 21, die von einem expandierbaren Balg 26 gebildet wird, gegen die Formungsfläche 8 zu pressen. Der Balg 26 kann z.B. von einer Gummiblase gebildet sein, die mit Druckgas beaufschlagt ist.

Die Figuren 7 und 8 zeigen in Aufsicht auf Druckflächen 7 mögliche Formen und Anordnungen von Druckflächen 7. Z.B. können Druckflächen 7 einer Vorrichtung eine gleiche oder verschiedene Größe aufweisen und jeweils gleiche oder verschiedene Formen, z.B. dreieckig oder viereckig. Generell bevorzugt weisen die Stempel Druckflächen 8 auf, die von Seitenflächen 11 umfasst sind, die aneinander anliegen und zwischen sich Kanäle 27 bilden können, z.B. durch Vorsprünge und Einbuchtungen parallel zur Längsachse (senkrecht zur Bildebene) der Stempel 1.

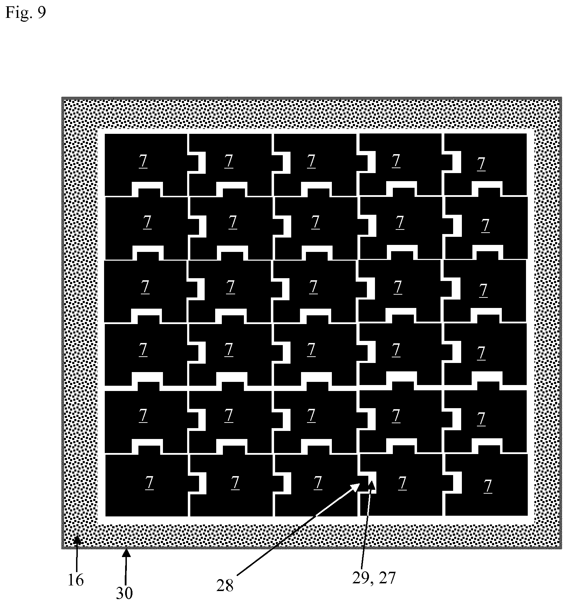

Die Figur 9 zeigt eine Ausführungsform von Stempeln 1 im Profil, deren Seitenwände 11 (senkrecht zur Darstellungsebene) so geformt sind, dass sie sowohl bei Beabstandung der Seitenwände 11 als auch bei Aneinanderliegen der Seitenwände 11 etwa parallel zur Längsachse (senkrecht zur Darstellungsebene) der Stempel 1 angeordnete Kanäle 27 bilden. Die Seitenwände 11 sind ohne anliegenden Unterdruck beabstandet und liegen wegen des Spiels der Träger 2 in den Führungen 3 bei anliegendem Unterdruck, der auf den Abschnitt der Stempel 1 gegenüber ihren Druckflächen 7 wirkt, aneinander an, während die nicht passenden Vorsprünge 20 und Einbuchtungen 21 benachbarter Seitenwände 11 in jedem Zustand Kanäle 22 bilden. Die Vorsprünge 28 und Einbuchtungen 29 können z.B. dadurch nicht passend zu der Seitenwand eines benachbarten Stempels geformt sein, dass die Vorsprünge 20 schmaler als die Einbuchtungen 21 zwischen ihnen sind.

Die Figur 9 zeigt eine das Schweißelement 16 umfassende umlaufende Schneidkante 30, die z.B. bei Pressen gegen eine Unterlage die überstehenden Bereiche einer ersten und einer zweiten Folie abtrennt.

**Bezugszeichenliste**

| | |
|---|---|
| 1 Stempel | 16 Schweißelement |
| 2 Träger | 17 Öffnung in Druckfläche |
| 3 Führung | 18 Bohrung durch Stempel |
| 4 Basis | 19 Deckel |
| 5 Fixiereinheit | 20 Anschluß für Überdruck |
| 6 Bohrung | 21 Patrize |
| 7 Druckfläche | 22 zweiter Stempel |
| 8 Formungsfläche | 23 zweite Druckfläche |
| 9 erste Folie | 24 zweiter Träger |
| 10 Zuführeinrichtung für erste Folie | 25 zweite Führung |
| 11 Seitenwand | 26 Balg |
| 12 Anschluß für Unterdruckquelle | 27 Kanal |
| 13 Gehäuse | 28 Vorsprung |
| 14 Antrieb, Stellmotor | 29 Einbuchtung |
| 15 Wegsensor | 30 Schneidkante |

## Patentansprüche

1. Vorrichtung zur Verpackung eines Gegenstands, die eine Formungsfläche (8) und eine Zuführeinrichtung (10) für eine erste Folie (9) vor die Formungsfläche (8) aufweist,, die von zumindest 3 Druckflächen (7) von Stempeln (1) gebildet wird, deren Druckflächen (7) an Trägern (2) befestigt sind, die verschieblich jeweils in Führungen (3), die in einer Anordnung enthalten sind, geführt sind und in einer Stellung zueinander festlegbar sind, wobei die Druckflächen (7) der Stempel (1) Öffnungen (17) aufweisen, die gesteuert mit einer Unterdruckquelle verbunden sind und/oder die Stempel (1) Seitenwände (11) aufweisen, die Kanäle (27) zwischen den Stempeln (1) ausbilden, die sich parallel zur Längsachse der Stempel (1) bis in die Formungsfläche (8) erstrecken und die gesteuert mit einer Unterdruckquelle verbunden sind, wobei die Unterdruckquelle an einem Abschnitt der Stempel (1) gegenüber deren Druckflächen ('7) angeschlossen ist, **gekennzeichnet durch** eine optische Abtasteinrichtung für den Gegenstand, wobei die Träger (2) angetrieben und abhängig von Signalen der Abtasteinrichtung für die dreidimensionale Form des Gegenstands entlang der Führung (3) gesteuert in eine Stellung verfahrbar und festlegbar sind.

2. Vorrichtung nach Anspruch 1, **dadurch gekennzeichnet, dass** die Träger (2) in Richtung auf die Druckflächen (7) federbelastet sind.

3. Vorrichtung nach Anspruch 1 oder 2, **dadurch gekennzeichnet, dass** die optische Abtasteinrichtung ein Linienscanner oder eine digitale Kamera ist.

4. Vorrichtung nach einem Ansprüche 1 bis 3, **dadurch gekennzeichnet, dass** die Träger (2) in Stellungen bewegt und festgelegt werden, in der die Formungsfläche (8) die dreidimensionale Form des Gegenstands zumindest anteilig nachbildet oder in eine Stellung bewegt und festgelegt werden, die um einen vorbestimmten Abstand größer oder kleiner als die dreidimensionale Form des Gegenstands ist.

5. Vorrichtung nach einem voranstehenden Ansprüche, **dadurch gekennzeichnet, dass** die Formungsfläche (8) von zumindest einem gesteuert beheizbaren Schweißelement (16) umfasst ist.

6. Vorrichtung nach einem voranstehenden Ansprüche, **dadurch gekennzeichnet, dass** sie eine Unterlage für den Gegenstand aufweist und dass die Anordnung von Führungen (3) mit den darin geführten Trägern (2) der Stempel (1) an einem Trägerarm angebracht ist, der eingerichtet ist, die Anordnung an die Unterlage zu bewegen, und eingerichtet ist, die Stempel (1) in Richtung auf die Unterlage zu bewegen, bis die Bewegung der Stempel (1) einen Widerstand erfährt.

7. Vorrichtung nach Anspruch 6, **dadurch gekennzeichnet, dass** sie eingerichtet ist, die Stempel (1) nach Erfahren des Widerstands um eine vorbestimmte Wegstrecke in die Gegenrichtung zu bewegen.

8. Vorrichtung nach einem voranstehenden Ansprüche, **dadurch gekennzeichnet, dass** die Druckflächen (7) der Stempel (1) gesteuert beheizbar und/oder gesteuert kühlbar sind.

9. Vorrichtung nach einem Ansprüche 6 bis 8, **dadurch gekennzeichnet, dass** die Unterlage ein Förderband ist, an dem eine Zuführeinrichtung für eine zweite Folie angeordnet ist, die eingerichtet ist, die zweite Folie auf das Förderband zu platzieren.

10. Vorrichtung nach einem voranstehenden Ansprüche, **dadurch gekennzeichnet, dass** die Stempel (1) jeweils Seitenflächen (11) aufweisen, die die Druckfläche (7) umfänglich einfassen und die Seitenflächen (11) nicht passend zu den Seitenflächen (11) benachbarter Stempel (1) geformt sind.

11. Vorrichtung nach einem voranstehenden Ansprüche, **dadurch gekennzeichnet, dass** zumindest eine Druckfläche (7) gegenüber der Längsachse ihres Stempels (1) schwenkbar ist.

12. Vorrichtung nach einem voranstehenden Ansprüche, **gekennzeichnet durch** einen Deckel (19), der zur Anordnung über der Formungsfläche (8) eingerichtet ist und einen Anschluß (20) für Überdruck aufweist.

13. Vorrichtung nach einem voranstehenden Ansprüche, **gekennzeichnet durch** eine Patrize (21), die zur Anordnung gegen die Formungsfläche (8) eingerichtet ist.

14. Verfahren zur Herstellung von verpackten Gegenständen mit Zuführen einer ersten Folie (9) vor eine Formungsfläche (8), Anordnen der Formungsfläche (8) mit davor liegender erster Folie (9) an einen Gegenstand, Zuführen einer zweiten Folie an den Gegenstand gegenüber der ersten Folie (9) und Verschweißen der ersten mit der zweiten Folie (9), wobei die Formungsfläche (8) von zumindest 3 Druckflächen von Stempeln (1) gebildet wird, deren Druckflächen (7) an Trägern (2) befestigt sind, die jeweils in Führungen (3), die in einer Anordnung enthalten sind, verschieblich geführt werden und in einer Stellung zueinander festgelegt werden, in der die Druckflächen (7) die dreidimensionale Form des Gegenstands zumindest anteilig nachbilden und dass die Druckflächen (7) der Stempel (1) Öffnungen (17) aufweisen, die gesteuert mit einer Unterdruckquelle verbunden werden und/oder zwischen den Stempeln (1) Kanäle (27) ausgebildet sind, die sich bis in die Formungsfläche (8) erstrecken und die gesteuert mit einer Unterdruckquelle verbunden werden, um die erste Folie (9) an die Druckflächen (7) zu ziehen, **dadurch gekennzeichnet, dass** die dreidimensionale Form des Gegenstands mittels einer optischen Abtasteinrichtung für den Gegenstand bestimmt wird und die Träger (2) angetrieben und abhängig von Signalen der Abtasteinrichtung für die dreidimensionale Form des Gegenstands entlang der Führung gesteuert in eine Stellung verfahren und in dieser festgelegt werden.

15. Verfahren nach Anspruch 14, **dadurch gekennzeichnet, dass** die zweite Folie dadurch zugeführt wird, dass der Gegenstand auf der auf einer Unterlage angeordneten zweiten Folie angeordnet ist und die Formungsfläche (8) mit der davor liegenden ersten Folie (9) über den Gegenstand und gegen die Unterlage bewegt wird.

16. Verfahren nach einem der Ansprüche 14 bis 15, **dadurch gekennzeichnet, dass** die Träger (2) federbelastet sind, die Druckflächen (7) gegen den Gegenstand angeordnet werden und die Träger (2) bei Anliegen der Druckflächen (7) am Gegenstand relativ zueinander und/oder an ihren Führungen (3) festgelegt werden, bevor die Öffnungen (17) in den Druckflächen (7) der Stempel (1) und/oder Kanäle (27) zwischen den Stempeln (1) mit der Unterdruckquelle verbunden werden.

17. Verfahren nach einem der Ansprüche 14 bis 16, **dadurch gekennzeichnet, dass** die erste Folie (9) eine Metallfolie oder eine Folie aus thermoplastischem Kunststoff ist.

18. Verfahren nach einem der Ansprüche 14 bis 17, **dadurch gekennzeichnet, dass** die erste Folie (9) eine bleibende Verformung entsprechend der dreidimensionalen Form des Gegenstands erhält, bevor sie von der Formungsfläche gelöst wird.

19. Verfahren nach einem der Ansprüche 14 bis 18, **dadurch gekennzeichnet, dass** die erste Folie (9) nicht rückstellend ist.

## Claims

1. Device for packaging an article having a shaping face (8) and a feeding device (10) for a first foil (9) in front of the shaping face (8), which is formed by at least three pressure faces (7) of dies (1), the pressure faces (7) of which are fastened to carriers (2) which are respectively guided slideably in guides (3) contained in an array and which are fixable in respect to one another in a position, wherein the pressure faces (7) of the dies (1) having openings (17) which are connectable in a controlled way of a low pressure source and/or the dies (1) have side walls (11) forming channels (27) between the dies (1), which extend in parallel to the longitudinal axis of the dies (1) into the shaping face (8) and which are connected to a low pressure source in a controlled way, wherein the low pressure source is connected to a section of the dies (1) opposite of their pressure faces (7), **characterized by** an optical scanning device for the article, wherein the carriers (2) are driven and are moveable in dependence on signals of the scanning device for the three-dimensional form of the article along the guide (3) in a controlled way into a position and are fixable.

2. Device according to claim 1, **characterized in that** the carriers (2) are spring-loaded in the direction towards the pressure faces (7).

3. Device according to claim 1 or 2, **characterized in that** the optical scanning device is a line scanner or a digital camera.

4. Device according to one of claims 1 to 3, **characterized in that** the carriers (2) are moved and fixed in positions in which the shaping face (8) at least sectionwise copies the three-dimensional form of the article or are moved and fixed in a position which by a predetermined distance is larger or smaller than the three-dimensional form of the article.

5. Device according to one of the preceding claims, **characterized in that** the shaping face (8) is encompassed by at least one controllably heatable welding element (16).

6. Device according to one of the preceding claims, **characterized in that** it has a base for the article and **in that** the array of guides (3) with the carriers (2) of the dies (1) guided therein is attached to a carrier arm which is disposed to move the arrangement to the base and is devised to move the dies (1) in the direction towards the base until the movement of the dies (1) experiences a resistance.

7. Device according to claim 6, **characterized in that** it is disposed to move the dies (1) after experiencing the resistance into the opposite direction by a predetermined length of way.

8. Device according to one of the preceding claims, characterized that the pressure faces (7) of the dies (1) are controllably heatable and/or controllably coolable.

9. Device according to one of claims 6 to 8, characterized that the base is a carrier belt on which the feeding device for a second foil is arranged which is disposed to place the second foil onto the carrier belt.

10. Device according to one of the preceding claims, **characterized in that** the dies (1) each have side faces (11) which circumferentially enclose the pressure face (7) and the side faces (11) are formed non-matchingly to the side faces (11) of neighbouring dies (1).

11. Device according to one of the preceding claims, **characterized in that** opposite of the longitudinal axis of its die (1) at least one pressure face (7) is swivelable.

12. Device according to one of the preceding claims, **characterized by** a lid (19) which is disposed for arrangement above the shaping face (8) and has a connection (20) for overpressure.

13. Device according to one of the preceding claims, **characterized by** a male mould (21) which is disposed for arrangement against the shaping face (8).

14. Process for producing packaged particles with feeding a first foil (9) in front of a shaping face (8), arranging the shaping face (8) having a first foil (9) lying in front of it, to an article, feeding a second foil to the article opposite of the first foil (9) and welding of the first foil to the second foil (9), wherein the shaping face (8) is formed by at least three pressure faces of dies (1), the pressure faces (7) of which are fixed to carriers (2) which each are guided shiftably in guides (3) contained in an array and are fixed in a position relative to one another, in which the pressure faces (7) at least sectionwise copy the three-dimensional form of the article and that the pressure faces (7) of the dies (1) have openings (17) which are connected in a controlled way to a low pressure source and/or channels (27) are formed between the dies (1) which extend into the shaping face (8) and which are controllably connected to a low pressure source in order to draw the first foil (9) to the pressure faces (7), **characterized in that** the three-dimensional form of the articles is determined by means of an optical scanner for the article and the carriers (2) are driven and in dependence on the signals of the scanning device for the three-dimensional form of the article are driven along the guide into a position and are fixed in this position in a controlled way.

15. Process according to claim 14, **characterized in that** the second foil is fed by the article being arranged on the second foil which is arranged on a base and that the shaping face (8) having the first foil (9) lying in front of it is moved against the article and against the base.

16. Process according to one of claims 14 to 15, characterized that the carriers (2) are spring-loaded, the pressure faces (7) are arranged against the article and the carriers (2) upon contact of the pressure faces (7) to the article are fixed relatively to one another and/or in their guides (3), prior to the openings (17) in the pressure faces (7) of the dies (1) and/or the channels (27) between the dies (1) are connected to the low pressure source.

17. Process according to one of claims 14 to 16, **characterized in that** the first foil (9) is a metal foil or a foil of a thermoplastic synthetic material.

18. Process according to one of claims 14 to 17, **characterized in that** the first foil (9) receives a permanent deformation corresponding to the three-dimensional form of the article prior to it being released from the shaping face.

19. Process according to one of claims 14 to 18, **characterized in that** the first foil (9) is not resetting.

## Revendications

1. Appareil d'emballage d'articles comprenant une surface de formage (8) et un dispositif d'alimentation (10) pour un premier film (9) en face de la surface de formage (8), qui est constituée au moins de 3 surfaces de pression (7) de poinçons (1) dont les surfaces de pression (7) sont fixées à des supports (2), circulant respectivement dans des guides (3) coulissant dans un agencement et pouvant être fixés dans une position l'une par rapport à l'autre, dans laquelle les surfaces de pression (7) des poinçons (1) présentent des ouvertures (17) qui sont connectées à une source de pression négative de manière contrôlée et/ou les poinçons (1) présentent des parois latérales (11), qui forment des canaux (27) entre les poinçons (1), qui s'étendent parallèlement à l'axe longitudinal des poinçons (1) jusqu'à la surface de formage (8) et qui sont reliés de manière contrôlée à une source de pression négative, dans lesquels la source de pression négative est connectée à une partie des poinçons (1) opposée à leurs surfaces de pression ('7), **caractérisé par** un dispositif de balayage optique pour l'article, le support (2) étant commandé et dépendant des signaux du dispositif de balayage pour obtenir la forme tridimensionnelle de l'article le long du guide (3), pour être commandé vers une position mobile et fixé.

2. Dispositif selon la revendication 1, **caractérisé en ce que** les supports (2) sont montés sur ressort dans la direction des surfaces de pression (7).

3. Appareil selon les revendications 1 ou 2, **caractérisé en ce que** le dispositif de balayage optique est un scanner à balayage linéaire ou un appareil photo numérique.

4. Dispositif selon l'une des revendications 1 à 3, **caractérisé en ce que** les supports (2) sont déplacés et fixés dans des positions dans lesquelles la surface de formage (8) reproduit au moins partiellement la forme tridimensionnelle de l'article ou se déplace et se fixe dans une position qui est plus grande ou plus petite par une distance prédéterminée que la forme tridimensionnelle de l'article.

5. Dispositif selon l'une des revendications précédentes, **caractérisé en ce que** la surface de formage (8) comprend au moins un élément de soudage chauffage contrôlé (16).

6. Dispositif selon l'une quelconque des revendications précédentes, **caractérisé en ce qu'**il comprend un support pour l'article et **en ce que** l'agencement des guides (3) avec les supports (2) guidés dans celui-ci (2) des poinçons (1) est monté sur un bras de support qui est agencé pour déplacer l'agencement contre le socle et conçu pour déplacer les poinçons (1) dans la direction du socle jusqu'à ce que le mouvement des poinçons (1) rencontre une résistance.

7. Appareil selon la revendication 6, **caractérisé en ce qu'**il est agencé pour déplacer le poinçon (1) après avoir rencontré la résistance d'une distance prédéterminée dans la direction opposée.

8. Dispositif selon l'une des revendications précédentes, **caractérisé en ce que** les surfaces de pression (7) des poinçons (1) peuvent être commandées à chaud et/ou à froid.

9. Dispositif selon l'une des revendications 6 à 8, **caractérisé en ce que** le socle est une bande transporteuse sur laquelle est disposé un dispositif d'alimentation pour un second film, conçu pour placer le second film sur la bande transporteuse.

10. Dispositif selon l'une des revendications précédentes, **caractérisé en ce que** les poinçons (1) présentent chacun des surfaces latérales (11) qui entourent de manière circon-férentielle la surface de pression (7) et que les surfaces latérales (11) ne sont pas conformées pour correspondre aux surfaces latérales (11) des poinçons adjacents (1).

11. Dispositif selon l'une des revendications précédentes, **caractérisé en ce qu'**au moins une surface de pression (7) peut pivoter par rapport à l'axe longitudinal de son poinçon (1).

12. Dispositif selon l'une des revendications précédentes, **caractérisé par** un couvercle (19) agencé pour être disposé au-dessus de la surface de formage (8) et présentant un raccord (20) pour surpression.

13. Dispositif selon l'une des revendications précédentes, **caractérisé par** une partie mâle (21) conçue pour être placée contre la surface de formage (8).

14. Procédé de fabrication d'articles emballés consistant à introduire un premier film (9) devant une surface de formage (8), à placer la surface de formage (8) avec un premier film (9) devant, à placer un second film contre l'article opposé au premier film (9) et à souder le premier au second film (9), dans lequel la surface de formage (8) est constituée au moins de 3 surfaces de pression (3) de poinçons (1), dont les surfaces de pression (7) sont fixées à des supports (2) guidés respectivement dans des guides (3) coulissant dans un agencement et sont fixées dans une position les unes par rapport aux autres, dans laquelle les surfaces de pression (7) reproduisent au moins partiellement la forme tridimensionnelle de l'article et en ce que les surfaces de pression (7) des poinçons (1) présentent des ouvertures (17), qui sont connectées à une source de pression négative et/ou des canaux (27) sont prévus entre les poinçons (1), canaux s'étendant dans la surface de formage (8) et qui sont connectés à une source de pression négative et commandées pour tirer le premier film (9) contre les surfaces de pression (7), **caractérisé en ce que** la forme tridimensionnelle de l'article est déterminée au moyen d'un dispositif de balayage optique pour l'article et que les supports (2) sont commandés et contrôlés en fonction des signaux du dispositif de balayage pour obtenir la forme tridimensionnelle de l'article le long du guide dans une position, puis sont définis dans ladite position.

15. Procédé selon la revendication 14, **caractérisé en ce que** pour acheminer le second film, on dispose l'article sur le second film agencé sur un socle, tandis que la surface de formage (8) se déplace avec le premier film (9) s'étendant devant ladite surface au-dessus de l'article et contre le socle.

16. Procédé selon l'une des revendications 14 à 15, **caractérisé en ce que** les supports (2) sont montés par ressort, les surfaces de pression (7) sont agencées contre l'article et les supports (2) sont fixés l'un par rapport à l'autre et/ou au niveau de leurs guides (3) lorsque les surfaces de pression (7) sont appliquées contre l'article, avant que les ouvertures (17) ne soient connectées à la source de pression négative dans les surfaces de pression (7) des poinçons (1) et/ou les canaux (27) entre les poinçons (1).

17. Procédé selon l'une des revendications 14 à 16, **caractérisé en ce que** le premier film (9) est une feuille métallique ou une feuille en matière thermoplastique.

18. Procédé selon l'une des revendications 14 à 17, **caractérisé en ce que** le premier film (9) reçoit une déformation permanente correspondant à la forme tridimensionnelle de l'article avant qu'il ne soit libéré de la surface de formage.

19. Procédé selon l'une des revendications 14 à 18, **caractérisé en ce que** le premier film (9) n'offre pas de résilience.
